# NEUE EUROPÄISCHE PATENTSCHRIFT

(11) **EP 2 205 863 B2**
(45) Veröffentlichungstag und Bekanntmachung des Hinweises auf die Entscheidung über den Einspruch: **30.03.2016**
(45) Hinweis auf die Patenterteilung: 24.08.2011
(21) Anmeldenummer: 08837721.3
(22) Anmeldetag: 07.10.2008
(51) Int. Cl.: F03D 80/00, F16C 35/077

(54) **LAGERANORDNUNG EINER ROTORNABE EINER WINDENERGIEANLAGE UND VERFAHREN ZU DEREN MONTAGE**
BEARING ARRANGEMENT OF A ROTOR HUB FOR A WIND POWER PLANT, AND METHOD FOR MOUNTING THE SAME
DISPOSITIF DE PALIER D'UN MOYEU DE ROTOR D'UNE ÉOLIENNE, ET SON PROCÉDÉ DE MONTAGE

(30) Priorität: 09.10.2007 DE 102007048377
(43) Veröffentlichungstag der Anmeldung: 14.07.2010
(73) Patentinhaber: Schaeffler Technologies AG & Co. KG, 91074 Herzogenaurach (DE)
(72) Erfinder: LÖSCHNER, Tim, 97072 Würzburg (DE); ZEIDLHACK, Rudolf, 97440 Werneck (DE)
(86) Internationale Anmeldenummer: PCT/DE2008/001655
(87) Internationale Veröffentlichungsnummer: WO 2009/046707

(56) Entgegenhaltungen:
- DE-A1- 10 351 524
- US-A- 4 757 211
- US-A- 5 663 600

## Beschreibung

### Gebiet der Erfindung

Die Erfindung betrifft eine Lageranordnung eines Rotors einer Windkraftanlage bestehend aus einer Rotornabe mit wenigstens einem Rotorblatt und aus einem Wälzlager, durch welches die Rotornabe drehbar gegenüber einem Maschinenträger in einer Gondel der Windkraftanlage gelagert ist, wobei das Wälzlager einen Außenring und einen Innenring aufweist, zwischen denen Wälzkörper angeordnet sind. Die Erfindung bezieht sich ferner auf ein Verfahren zum Austausch einer solchen Lageranordnung einer Windkraftanlage.

### Hintergrund der Erfindung

Üblichweise stützt sich der Rotor einer Windkraftanlage in einer Hauptlagerung ab, welche die Rotorwelle trägt. Diese Welle ist zur Übertragung der Abtriebsenergie an eine Eingangswelle eines Getriebes angebracht. Die Lagerung der Rotorwelle erfolgt zumeist mittels einer Fest-Loslagerung mit mindestens zwei Wälzlagern. Diese Konstruktion benötigt jedoch einen großen Bauraum und ist relativ teuer.

Es sind bereits Lageranordnungen von Windkraftanlagen bekannt, bei welchen nur ein einziges Wälzlager als Lageranordnung verwendet wird, das alle Kräfte und Momente übertragen kann. Diese Lösung ist kostengünstiger und beansprucht einen geringeren Bauraum. Für Reparaturarbeiten am Hauptlager oder zum Lagerwechsel bei einer Windkraftanlage ist es in der Regel notwendig, den Rotor zu demontieren. Dies ist in Anbetracht der Tatsache, dass neuere Anlagen auf Türmen in Höhen über 100 m installiert sind ein enormer Kostenfaktor.

Eine derartige Lageranordnung ist beispielsweise aus der DE 101 02 255 A1 bekannt. Diese Druckschrift beschreibt eine Windkraftanlage mit einem an der Spitze eines Turms zu befestigenden Maschinenträger, der einerseits den statischen Teil eines elektrischen Generators hält und andererseits dessen drehenden Teil sowie eine Rotorblätter tragende Nabe eines Rotors lagert, wobei die Rotornabe und das drehende Generatorteil an einer gemeinsamen Hohlwelle befestigt sind, welche unter Wälzlager-Vermittlung auf einer Achshülse sitzt, die am Maschinenträger angebracht ist. Hierbei ist vorgesehen, dass als Wälzlager ein einziges, auch Momente aufnehmendes Lager zwischen der Achshülse und der Hohlwelle vorgesehen ist. Auf diese Weise sollen sich die axiale Länge der Achshülse und damit ihr Gewicht beträchtlich verringern, was auch für den der Lagerung dienenden Teil der Hohlwelle gelten soll. Dabei soll das Lager alle, auch in ihrer Richtung wechselnde Momente aufnahmen, welche um quer zur Wellenachse verlaufendeAchsen auftreten, ohne die relative Lage des Generator-Rotors gegenüber dem Generator-Stator über ein kritisches Maß hinaus zu verändern.

Aus der EP 1 426 639 A1 ist ein Verfahren zur Montage eines zweireihigen Kegelrollenlagers als Wälzlager einer Windkraftanlage bekannt, welches sich dadurch auszeichnet, dass die Segmente eines ersten Innenrings und die Segmente eines zweiten Innenrings mit ihren einander zugewandten axialen Stirnflächen einander derart angenähert werden, dass zu einem Zeitpunkt, zu dem sämtliche Segmente des Außenrings gerade an der Bohrungsfläche und sämtliche Segmente des ersten und zweiten Innenrings gerade an der Mantelfläche der Welle zur Anlage kommen, zwischen den axialen Stirnflächen derSegmente des ersten und zweiten Innenrings ein axialer Spalt verbleibt. Grundsätzlich ist die Montage eines segmentierten Lagers in Hinblick auf die Montagefreundlichkeit von Vorteil, jedoch entstehen durch die Teilung kaum zu vermeidende Inhomogenitäten in den Laufbahnen des Wälzlagers.

Aus der DE 103 51 524 A1 ist schließlich eine Anordnung zur Übertragung von Rotorbiege- und Rotor drehmomenten für eine Windenergieanlage bekannt, welche eine Rotornabe mit mindestens einem daran befestigten Rotorblatt sowie ein den Rotor tragende Großwälzlager, insbesondere ein Kegelrollenlager, mit gehäusefestem Außenring und mit einem nachgeschalteten Planetengetriebe aufweist. Bei dieser Anordnung ist vorgesehen, dass die Nabe direkt mit dem Innenring des Radiallagers oder/und mit einem Lagerversteifüngsring verbunden ist. Hierdurch soll eine besonders kompakte, leichte und kostengünstige Anordnung zur Übertragung der Rotorbiege- und Drehmomente über ein Großwälzlager und ein Getriebe geschaffen werden.

Allen Lösungen mit einem einzigen Hauptlager des Rotors haftet der Nachteil an, dass sich die Lager im Bedarfsfalle nur mit großem Maschinen- und Arbeitsaufwand austauschen lassen, was vor allem daran liegt, dass die Wälzlager nach hinten, also in Richtung des Inneren der Gondel der Windkraftanlage abgezogen werden müssen. Dies macht ein Öffnen der Gondel, eine Demontage von Verkleidungen, Ausbau störender Aggregate und Maschinenkomponenten und dergleichen notwendig, was bei der Höhe über Grund von bis zu 100 m eine gefährliche, aber vor allem geräteintensive Tätigkeit ist, da gegebenenfalls mehrere Kräne und Hebebühnen für diese Wartungsarbeit eingesetzt werden müssen. Ein weiteres Dokument aus dem stand der Technik ist US 4 757 211 A.

### Aufgabe der Erfindung

Ausgehend von den dargelegten Nachteilen der Lösungen des bekannten Standes der Technik liegt der Erfindung deshalb die Aufgabe zu Grunde, eine Lageranordnung und ein Verfahren zu ihrer Montage zu schaffen, welche die geschilderten Nachteile beseitigt. Insbesondere soll eine Lageranordnung einer Windkraftanlage bereitgestellt werden, welche einfach zu montieren und zu demontieren ist. Ferner soll ein Verfahren zum Austausch der Lageranordnung angegeben werden.

### Beschreibung der Erfindung

Der Erfindung liegt die Erkenntnis zugrunde, dass sich die gestellte Aufgabe dadurch lösen lässt, dass das Wälzlager der Lageranordnung von vorne, also generatorfem, in eine durchmessergrößere Öffnung der Rotornabe eingesetzt und mit dieser verbunden ist.

Die Erfindung geht daher aus von einer Lageranordnung eines Rotors einer Windkraftanlage bestehend aus einer Rotornabe mit wenigstens einem Rotorblatt und aus einem Wälzlager, durch welches die Rotornabe drehbar gegenüber einem Maschinenträger in einer Gondel der Windkraftanlage gelagert ist, wobei das Wälzlager einen Außenring und einen Innenring aufweist, zwischen denen Wälzkörper angeordnet sind. Zudem ist vorgesehen, dass das Wälzlager koaxial in einer axial außen offenen zylindrischen Öffnung der Rotornabe angeordnet ist, wobei der Außenring des Wälzlagers drehfest und lösbar mit der Rotornabe verbunden ist.

Durch diesen Aufbau wird vorteilhaft erreicht, dass die Montage bzw. Demontage des Wälzlagers der Lageranordnung drastisch vereinfacht wird. Soll das Wälzlager zu Wartungs- oder Austauschzwecken aus der Windkraftanlage entfernt werden, genügt es nun, das Wälzlager nach vorne aus der Rotornabe zu entfernen. Aufwändige Arbeiten innerhalb der Gondel bzw. an deren Einbauteilen entfallen gänzlich, da alle wesentlichen Bauteile von außen, also generatorfern von vorne zugänglich sind. Außerdem ist die Funktionsfähigkeit des Wälzlagers bzw. des Rotors der Windkraftanlage in keinerlei Hinsicht beeinträchtigt.

Weiter kann vorgesehen sein, dass die Rotornabe an einem axial inneren Ende der zylindrischen Öffnung ein nach radial innen kragendes Bord mit einer axial äußeren Stirnseite aufweist, und dass eine axial innere Stirnseite des Außenrings an deraxial äußeren Stirnseite des Bordes anliegt sowie mit diesem kraftschlüssig verbindbar ist.

In anderen praktischen Weiterbildungen kann vorgesehen sein, dass axial durch das Bord mehrere Bohrungen geführt sind, welche mit axial durch den Außenring geführte Bohrungen fluchten, wobei durch die Bohrungen Schraubbolzen zur kraftschlüssigen Verbindung des Außenrings des Wälzlagers mit der Rotornabe führbar sind.

Erfindungsgemäß mündet ein Außenmantel der Rotornabe in einen radial nach außen gerichteten Rand welcher mehrere axiale Bohrungen aufweist, welche mit Bohrungen im Maschinenträger fluchten, wobei der Maschinenträgeraxial und radial außen an der Gondel der Windkraftanlage angeordnet ist. Diese Ausgestaltung lässt sich noch dadurch ergänzen, dass durch die Bohrungen des genannten Randes der Rotornabe und durch die Bohrungen des Maschinenträgers Schraubbolzen führbar sind, durch welche die Rotornabe mit dem Maschinenträger kraftschlüssig verbindbar ist.

In einer besonders praktischen Weiterbildung der Erfindung ist vorgesehen, dass des Wälzlager ein Lager der Bauform der Momentenlager ist.

Die Aufgabe, ein Verfahren zum Austausch einer Lageranordnung einer Windkraftanlage bereitzustellen, wird mit einem Verfahren gelöst, welches folgende Verfahrensschritte umfasst:
- Befestigen der Rotornabe an einen radial und axial außen an einer Gondelangeordneten Maschinenträger,
- Lösen der Verbindung von Rotornabe und Lageraußenring,
- Abziehen des Wälzlagers nach vorne aus einer zylindrischen Öffnung der Rotornabe, und
- Einbringen eines anderen Wälzlagers in umgekehrter Reihenfolge.

Auf diese Weise wird ein denkbar einfaches und vorteilhaftes Verfahren zur Montage beziehungsweise Demontage des Hauptlagers einer Windkraftanlage bereitgestellt, das gegenüber den bislang bekannten Verfahren deutlich vereinfacht ist. Denn dadurch, dass alle wesentlichen Elemente von außen bzw. von vorne an der Windkraftanlage zugänglich gemacht werden, kann ein Austausch eines Hauptlagers einer Windkraftanlage deutlich schneller und kostengünstiger als bisher durchgeführt werden.

### Kurze Beschreibung der Zeichnungen

Eine bevorzugte Ausführungsform der erfindungsgemäß ausgebildeten Lageranordnung wird nachfolgend unter Bezugnahme auf die beigefügten Zeichnungen näher erläutert. Dabei zeigen:
- Figur 1: eine Schnittansicht durch eine Windkraftanlage mit einer La-geranordnung gemäß der Erfindung in einer Teilansicht;
- Figur 2: einen Längsschnitt durch die Lageranordnung gemäß der Er- findung in Teilansicht in montierten Zustand;
- Figur 3: einen Längsschnitt durch die Lageranordnung gemäß Fig. 2 in teildemontiertem Zustand.

### Ausführliche Beschreibung der Zeichnungen

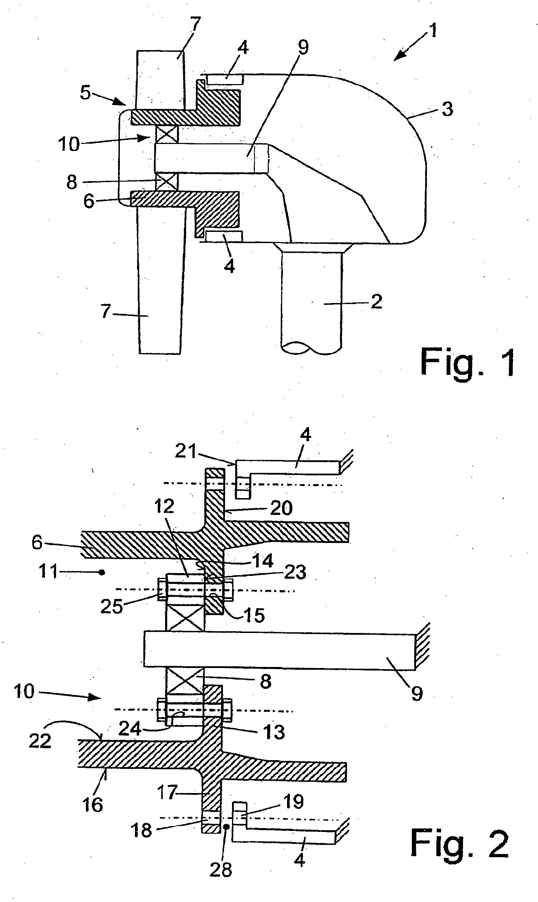

In Fig. 1 ist schematisch eine Windkraftanlage 1 in Teilschnittansicht dargestellt. Die Windkraftanlage 1 verfügt über eine um 360° drehbar auf einem Turm 2 gelagerte Gondel 3. Innerhalb der Gondel 3 sind Maschinenträger 4 radial und axial außen in Rotornähe angeordnet, sowie die wesentlichen, nicht näher dargestellten Funktionsteile, wie ein elektrischer Generator, Übersetzungsgetriebe und dergleichen platziert. Der Generator wird von einem Rotor 5 über das Getriebe angetrieben und erzeugt elektrischen Strom, welcher über ebenfalls nicht näher dargestellte elektrische Leitungen in ein Stromnetz eingespeist wird.

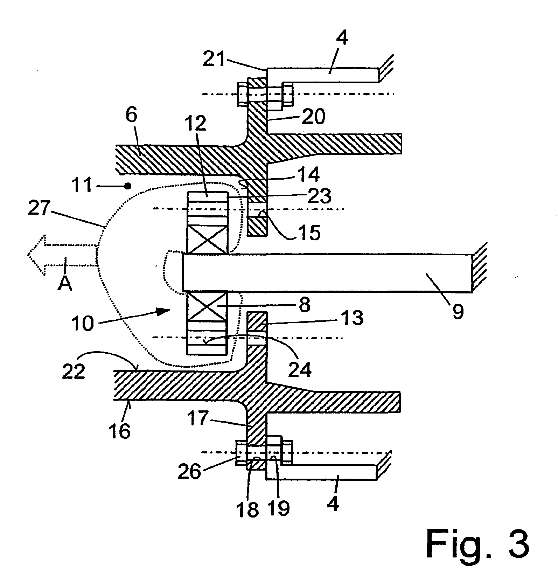

Der Rotor 5 umfasst im Wesentlichen eine Rotornabe 6, an deren radialem Umfang mehrere Rotorblätter 7 befestigt sind, welche den Rotor 5 durch vorbei streichenden Wind in Rotation versetzen. Koaxial in die Rotornabe 6 ist ein Wälzlager 8 als Hauptlager des Rotors 5 eingesetzt, welches die Rotornabe 6 drehbar mit einer als Hohlwelle 9 ausgebildeten drehfesten Achse verbindet. Die Verbindung des Wälzlagers 8 mit der Rotornabe 6 bildet die erfindungsgemäße Lageranordnung 10, welche im Detail in den Figuren 2 und 3 dargestellt ist.

In Fig. 2 ist die Lageranordnung 10 in Längsschnitt in montiertem Zustand dargestellt, also in demjenigen Zustand, in dem die Rotornabe 6 frei drehen kann. Die Rotornabe 6 weist eine von axial außen zugängliche zylindrische Öffnung 11 auf, in welche das Wälzlager 8 eingesetzt ist. Das Wälzlager 8 weist einen Außenring 12, einen nicht näher dargestellten Innenring und dazwischen angeordnete, ebenfalls nicht weiter dargestellte Wälzkörper auf, beispielsweise in Form von Kegelrollen. Der Innenring ist drehfest auf der Hohlwelle 9 angeordnet.

Die Rotornabe 6 hat an einem axial inneren Ende der zylindrischen Öffnung 11 einen Anschlag in Form eines nach radial innen kragenden, umlaufenden Bordes 13 mit einer axial äußeren Stirnseite 14, durch welche mehrere axiale Bohrungen 15 geführt sind. Ein Außenmantel 16 der Rotornabe 6 mündet in einen radial nach außen gerichteten Rand 17, der unter Einhaltung eines geringen radialen Spalts 28 axial vom Maschinenträger 4 beabstandet ist und mehrere axiale Bohrungen 18 aufweist. Diese Bohrungen 18 befinden sich auf gleicher radialer Höhe wie axiale Bohrungen 19 im Maschinenträger 4. Im normalen Betriebszustand der Windkraftanlage 1 verbleibt demnach ein axialer Abstand zwischen einer axial inneren Stirnseite 20 des Randes 17 der Rotornabe 6 und einer axial äußeren Stirnseite 21 des Maschinenträgers 4.

Das Wälzlager 8 ist derart bemessen, dass der Durchmesser des Außenrings 12 kleiner ist als der Durchmesser eines Innenmantels 22 der Rotornabe 6. Eine axial innere Stirnseite 23 des Außenrings 12 liegt an der axial äußeren Stirnseite 14 des Bordes 13 an, und zwar so, dass axial durch den Außenring 12 geführte Bohrungen 24 mit den axialen Bohrungen 15 des Bordes 13 fluchten. Durch diese Bohrungen 15,24 sind Schraubbolzen 25 geführt, welche den Außenring 12 an der Rotornabe 6 kraftschlüssig halten.

In Fig. 3 ist die Lageranordnung 10 im Längsschnitt in teildemontiertem Zustand dargestellt. Um die Lageranordnung demontieren beziehungsweise montieren zu können, wird die Rotornabe 6 zunächst an den Maschinenträger 4 festgelegt. Hierzu werden in die Bohrungen 18 des Randes 17 der Rotornabe 6 and in die Bohrungen 19 des Maschinenträgers 4 Schraubbolzen 26 eingeführt und festgezogen, wodurch die Rotornabe 6 axial zum Maschinenträger 4 hin verschoben wird, bis die axial innere Stirnseite 20 des Randes 17 der Rotornabe 6 an der Stirnseite 21 des Maschinenträgers 4 anliegt. Gemäß einer anderen Variante ist es auch möglich, Zwischenstücke in den Spalt 28 gemäß Fig. 2 zu stecken, um dann die Schraubbolzen 26 in die Bohrungen 18, 19 einzuführen und festzuschrauben. Ein axiales Verschieben der Rotornabe 6 beim Festschrauben der Schraubbolzen 26 ist dann nicht notwenig. Sobald die Schraubbolzen 26 festgezogen sind, wird die Rotornabe 6 von Maschinenträger 4 gehalten und das Wälzlager 8 kann dann nach axial außen bzw. nach vorne aus der Rotornabe 6 in Richtung des Pfeils A abgezogen werden.

Hierzu werden zunächst die in Fig. 3 nicht dargestellten Schraubbolzen 25, mit denen der Außenring 12 mit dem Bord 13 der Rotornabe 6 festgelegt sind, gelöst und entfernt. Anschließend wird das Wälzlager 8 mit einem geeigneten, durch die punktierte Linie 27 angedeuteten Abziehwerkzeug in Richtung des Pfeils A nach vorne aus der Rotornabe 6 entfernt. Anschließend wird ein neues Wälzlager 8 wiederum von vorn in die zylindrische Öffnung 11 der Rotornabe 6 eingeführt und in zuvor beschriebener Weise mit der Rotornabe 6 verbunden, woraufhin die Schraubbolzen 26 zwischen Maschinenträger4 und Rotornabe 6 gelöst und der korrekte Abstand zwischen Rotornabe 6 und Maschinenträger 4 wieder hergestellt wird.

Damit ist eine Lageranordnung 10 geschaffen, die auf einfachste Weise aus einer Windkraftanlage entfernt bzw. in eine Windkraftanlage eingebaut werden kann, so dass sich der maschinelle Aufwand zum Austausch eines Hauptlagers einer Windkraftanlage drastisch reduzieren lässt, da sich das Hauptlager nach vorne und nach außen abziehen lässt, während sich ein Hauptlager bislang nur nach hinten, also zum Inneren der Gondel gerichtet, entfernen ließ, was wegen der dort angeordneten weiteren Antriebs- und Stromerzeugungsanlagen mit erheblichen Aufwand verbunden ist. Das für die erfindungsgemäß ausgebildete Lageranordnung 10 benutzte Wälzlager 8 ist vorzugsweise ein Kegelrollenlager.

### Bezugszahlenliste

- 1: Windkraftanlage
- 2: Turm
- 3: Gondel
- 4: Maschinenträger
- 5: Rotor
- 6: Rotornabe
- 7: Rotorblatt
- 8: Wälzlager
- 9: Hohlwelle
- 10: Lageranordnung
- 11: Zylindrische Öffnung
- 12: Außenring
- 13: Bord
- 14: Stirnseite
- 15: Axiale Bohrung
- 16: Außenmantel der Rotornabe 6
- 17: Rand
- 18: Axiale Bohrung
- 19: Axiale Bohrung
- 20: Stirnseite des Randes 17
- 21: Stirnseite des Maschinenträgers 4
- 22: Innenmantel der Rotornabe 6
- 23: Axial innere Stirnseite des Außenrings 12
- 24: Bohrung
- 25: Schraubbolzen
- 26: Schraubbolzen
- 27: Abziehwerkzeug
- 28: Spalt
- A: Pfeil; Abziehrichtung

## Patentansprüche

1. Windkraftanlage (1) mit einem Rotor (5), einen Maschinentraeger (4) und mit einer Lageranordnung (10), bestehend aus einer Rotornabe (6) mit wenigstens einem Rotorblatt (7) und aus einem Wälzlager (8), durch welches die Rotornabe (6) drehbar gegenüber einem Maschinenträger (4) in einer Gondel (3) der Windkraftanlage (1) gelagert ist, wobei das Wälzlager (8) einen Außenring (12) und einen Innenring aufweist, zwischen denen Wälzkörper angeordnet sind, **wobei** das Wälzlager (8) koaxial in einer axial außen offenen zylindrischen Öffnung (11) der Rotornabe (6) angeordnet ist, wobei der Außenring (12) des Wälzlagers (8) drehfest und lösbar mit der Rotornabe (6) verbunden ist, **dadurch gekennzeichnet, dass** ein Außenmantel (16) der Rotornabe (6) in einen radial nach außen gerichteten Rand (17) mündet, welcher mehrere axiale Bohrungen (18) aufweist, die mit Bohrungen (19) im Maschinenträger (4) fluchten, wobei der Maschinenträger (4) axial und radial außen an der Gondel (3) der Windkraftanlage (1) angeordnet ist.

2. Windkraftanlage nach Anspruch 1, **dadurch gekennzeichnet, dass** die Rotornabe (6) an einem axial inneren Ende der zylindrischen Öffnung (11) ein nach radial innen kragendes Bord (13) mit einer axial äußeren Stirnseite (14) aufweist, und dass eine axial innere Stirnseite (23) des Außenrings (12) an der axial äußeren Stirnseite (14) des Bordes (13) anliegt sowie mit diesem kraftschlüssig verbindbar ist.

3. Windkraftanlage nach Anspruch **2, dadurch gekennzeichnet, dass** axial durch das Bord (13) mehrere Bohrungen (15) geführt sind, welche mit axial durch den Außenring (12) geführte Bohrungen (24) fluchten, wobei durch die Bohrungen (15, 24) Schraubbolzen (25) zur kraftschlüssigen Verbindung des Außenrings (12) mit der Rotornabe (6) führbar sind.

4. Windkraftanlage nach Anspruch 1, **dadurch gekennzeichnet, dass** durch die Bohrungen (18) des Randes (17) und durch die Bohrungen (19) des Maschinenträgers (4) Schraubbolzen (26) führbar sind, durch welche die Rotornabe (6) mit dem Maschinenträger (4) kraftschlüssig verbindbar ist.

5. Windkraftanlage nach einem der Ansprüche 1 bis **4, dadurch gekennzeichnet, dass** das Wälzlager (8) bevorzugt ein Lager der Bauform der Momentenlager ist.

6. Verfahren zum Austausch der Lageranordnung einer Windkraftanlage (1) nach einem der vorstehenden Ansprüche, mit den folgenden Schritten:
- Befestigen der Rotornabe (6) an einen radial und axial außen an einer Gondel (3) angeordneten Maschinenträger (4),
- Lösen der Verbindung von Rotornabe (6) und Lageraußenring (12),
- Abziehen des Wälzlagers (8) nach vorne aus einer zylindrischen Öffnung (11) der Rotornabe (6),
- Einbringen eines anderen Wälzlagers (8) in umgekehrter Reihenfolge.

## Claims

1. Wind power plant (1) having a rotor (5), a machine carrier (4) and having a bearing arrangement (10), composed of a rotor hub (6) with at least one rotor blade (7) and of a roller bearing (8) by means of which the rotor hub (6) is mounted so as to be rotatable with respect to a machine carrier (4) in a gondola (3) of the wind power plant (1), wherein the roller bearing (8) has an external ring (12) and an internal ring, between which roller bodies are arranged, wherein the roller bearing (8) is arranged coaxially in an axially externally open cylindrical opening (11) in the rotor hub (6), wherein the external ring (12) of the roller bearing (8) is connected to the rotor hub (6) in a rotationally fixed and releasable fashion, **characterized in that** an external casing (16) of the rotor hub (6) opens into a radially outwardly directed rim (17) which has a plurality of axial bores (18) which are aligned with bores (19) in the machine carrier (4), wherein the machine carrier (4) is arranged axially and radially on the outside of the gondola (3) of the wind power plant (1).

2. Wind power plant according to Claim 1, **characterized in that** the rotor hub (6) has, at an axially inner end of the cylindrical opening (11), a radially inwardly protruding edge (13) with an axially outer end side (14), and **in that** an axially inner end side (23) of the external ring (12) bears against the axially outer end side (14) of the edge (13) and can be connected thereto in a frictionally locking fashion.

3. Wind power plant according to Claim 2, **characterized in that** a plurality of bores (15) are made to extend axially through the edge (13) and are aligned with bores (24) which are made to extend axially through the external ring (12), wherein screw bolts (25) for producing a frictionally locking connection of the external ring (12) to the rotor hub (6) can be made to extend through the bores (15, 24).

4. Wind power plant according to Claim 1, **characterized in that** screw bolts (26) can be made to extend through the bores (18) in the rim (17) and through the bores (19) in the machine carrier (4), by means of which screw bolts (26) the rotor hub (6) can be connected in a frictionally locking fashion to the machine carrier (4).

5. Wind power plant according to one of Claims 1 to 4, **characterized in that** the roller bearing (8) is preferably a bearing of the torque bearing design.

6. Method for replacing the bearing arrangement of a wind power plant (1) according to one of the preceding claims, having the following steps:
- attachment of the rotor hub (6) to a machine carrier (4) which is arranged radially and axially on the outside of a gondola (3),
- release of the connection of the rotor hub (6) and bearing outer ring (12),
- pulling off of the roller bearing (8) forward out of a cylindrical opening (11) of the rotor hub (6),
- insertion of another roller bearing (8) in the reverse sequence.

## Revendications

1. Centrale éolienne (1) comprenant un rotor (5), un support de machine (4) et comprenant un agencement de palier (10) constitué d'un moyeu de rotor (6) avec au moins une pale de rotor (7), et d'un palier à roulement (8), par le biais duquel le moyeu de rotor (6) est monté à rotation par rapport au support de machine (4) dans une nacelle (3) de la centrale éolienne (1), le palier à roulement (8) présentant une bague extérieure (12) et une bague intérieure, entre lesquelles sont disposés des corps de roulement, le palier à roulement (8) étant disposé coaxialement dans une ouverture cylindrique (11) ouverte axialement vers l'extérieur du moyeu de rotor (6), la bague extérieure (12) du palier à roulement (8) étant connectée de manière solidaire en rotation et amovible au moyeu de rotor (6), **caractérisé en ce qu'**une enveloppe extérieure (16) du moyeu de rotor (6) débouche dans un bord (17) orienté radialement vers l'extérieur, qui présente plusieurs alésages axiaux (18), qui sont alignés avec des alésages (19) dans le support de machine (4), le support de machine (4) étant disposé axialement et radialement à l'extérieur sur la nacelle (3) de la centrale éolienne (1).

2. Centrale éolienne selon la revendication 1, **caractérisée en ce que** le moyeu de rotor (6) présente, sur une extrémité axialement interne de l'ouverture cylindrique (11) un bord (13) saillant radialement vers l'intérieur, avec un côté frontal axialement extérieur (14), et **en ce qu'**un côté frontal axialement intérieur (23) de la bague extérieure (12) s'applique contre le côté frontal axialement extérieur (14) du bord (13) et peut être connecté par engagement par force avec celui-ci.

3. Centrale éolienne selon la revendication 2, **caractérisée en ce que** plusieurs alésages (15) sont guidés axialement à travers le bord (13), lesquels sont alignés avec des alésages (24) guidés axialement à travers la bague extérieure (12), des boulons filetés (25) pouvant être guidés à travers les alésages (15, 24) pour la connexion par engagement par force de la bague extérieure (12) au moyeu de rotor (6).

4. Centrale éolienne selon la revendication 1, **caractérisée en ce que** des boulons filetés (26) peuvent être guidés à travers les alésages (18) du bord (17) et à travers les alésages (19) du support de machine (4), par le biais desquels le moyeu de rotor (6) peut être connecté par engagement par force au support de machine (4).

5. Centrale éolienne selon l'une quelconque des revendications 1 à 4, **caractérisée en ce que** le palier à roulement (8) est de préférence un palier d'une construction en forme de palier de couple.

6. Procédé de remplacement de l'agencement de palier d'une centrale éolienne (1) selon l'une quelconque des revendications précédentes, comprenant les étapes consistant à :
- fixer le moyeu de rotor (6) à un support de machine (4) disposé radialement et axialement à l'extérieur sur une nacelle (3) ;
- desserrer la connexion du moyeu de rotor (6) et de la bague externe de palier (12),
- tirer le palier à roulement (8) vers l'avant hors d'une ouverture cylindrique (11) du moyeu de rotor (6),
- introduire un autre palier à roulement (8) dans la séquence d'opérations inverse.
